# EUROPÄISCHE PATENTSCHRIFT

(11) **EP 1 034 075 B1**
(45) Veröffentlichungstag und Bekanntmachung des Hinweises auf die Patenterteilung: **14.05.2003**
(21) Anmeldenummer: 98963366.4
(22) Anmeldetag: 12.11.1998
(51) Int. Cl.: B32B 5/18, B32B 5/26, B32B 27/12, B32B 27/20

(54) **KUNSTSTOFFOLIE, WELCHE WASSERDICHT UND WASSERDAMPFDURCHLÄSSIG IST**
WATER-RESISTANT, WATER-VAPOR PERMEABLE PLASTIC SHEET
FEUILLE EN MATIERE PLASTIQUE ETANCHE A L'EAU ET PERMEABLE A LA VAPEUR D'EAU

(30) Priorität: 06.12.1997 DE 19754251
(43) Veröffentlichungstag der Anmeldung: 13.09.2000
(73) Patentinhaber: Coronor Composites GmbH, 31224 Peine (DE)
(72) Erfinder: BOICH, Heinz-Horst, D-31224 Peine (DE)
(74) Vertreter: Patentanwälte Thömen & Körner
(86) Internationale Anmeldenummer: DE9803396
(87) Internationale Veröffentlichungsnummer: WO99029499

(56) Entgegenhaltungen:
- EP-A- 0 811 479
- WO-A-96/16562
- WO-A-96/19346
- WO-A-98/58799
- US-A- 4 734 324
- US-A- 5 032 450
- US-A- 5 843 057
- DATABASE WPI Section Ch, Week 9141 Derwent Publications Ltd., London, GB; Class A17, AN 91-299400 XP002102023 & JP 03 198724 A (EIZAI SEIKAKEN KK) , 29. August 1991

## Beschreibung

Die Erfindung betrifft eine Kunststoffolie, welche wasserdicht und wasserdampfdurchlässig ist sowie ein Verfahren zu deren Herstellung.

Kunststoffolien, welche wasserdicht und wasserdampfdurchlässig sind, werden auf einer Vielzahl von technischen Gebieten eingesetzt, insbesondere für Dach-Unterspannbahnen, für Textilien, für hygienische Artikel und dergleichen.

Der Transport von Wasserdampf durch derartige Folien wird grundsätzlich entweder auf chemischem Wege oder auf physikalischem Wege ermöglicht.

Bei einem rein chemischen Transport von Wasserdampf durch die Folie besteht diese aus einem geeigneten Kunststoffmaterial, beispielsweise aus Polyurethan oder Polyetherblockamid. Der Transport des Wasserdampfs durch die Folie erfolgt bei derartigen Materialien durch Absorption/Desorption. Diese Folien haben sich weitestgehend bewährt, sie weisen jedoch einige Nachteile auf. Insbesondere Polyetherblockamid neigt dazu, durch die Absorptions-/Desorptions-Vorgänge des Wasserdampfs in der Folie aufzuquellen, d.h. sein Volumen und seine Fläche zu vergrößern. Dies ist insofern problematisch, als daß eine unter Umständen gewünschte Verbindung mit Trägermaterialien wie einem Vlies, wie dies beispielsweise in der DE 44 37 521 A1 für eine Unterspannbahn beschrieben ist, einer großen Beanspruchung ausgesetzt ist, da das Vlies, welches mit der Folie verbunden ist, nicht aufquillt und insbesondere seine Flächengröße beibehält. Hierdurch kommt es zu Aufwerfungen, wodurch sich das Vlies von der Folie ablösen kann.

Trotz dieser Problematik wird gerne auf eine chemisch transportierende Kunststoffolie zurückgegriffen, da diese sehr gute Eigenschaften bezüglich der Wasserdichtigkeit aufweist.

Die physikalisch transportierenden Folien weisen Löcher oder Kapillaren auf, durch die hindurch der Wasserdampf auf physikalischem Wege transportiert werden kann. Durch die Poren oder Kapillaren in der Folie können diese aus einem Kunststoffmaterial hergestellt werden, beispielsweise aus Polypropylen oder Polyethylen, welches die negative Eigenschaft des Aufquellens nicht aufweist und daher flächenstabil ist. Eine derartige Folie kann auf einfache Weise dauerhaft mit einem Vlies verbunden werden, wobei hier nicht die Gefahr des Ablösens besteht, da die Folie nicht aufquillt.

Nachteilig an diesen Kunststoffolien ist aber, daß sie nicht immer vollständig wasserdicht sind. Werden die Kapillaren zudem dadurch erzeugt, daß mineralische Zusatzstoffe in das Kunststoffmaterial der Folie eingelagert werden und die Folie anschließend verstreckt wird, nimmt die mechanische Festigkeit weiter ab. Die Einlagerung von mineralischen Zusatzstoffen, beispielsweise Bariumsulfat oder Kalziumcarbonat, durch welche die Poren- oder Kapillargrößen gering gehalten werden können, macht derartige Folien in der Herstellung zudem teuer.

Aufgabe der Erfindung ist es, eine Folie aus Kunststoff, welche wasserdicht und wasserdampfdurchlässig ist, zu schaffen, welche preisgünstig herzustellen ist, eine ausreichende mechanische Festigkeit aufweist und welche im Bedarfsfalle dauerhaft mit einem Trägermaterial wie einem Vlies verbindbar ist. Eine weitere Aufgabe ist die Bereitstellung eines Verfahrens zu Herstellung einer derartigen Folie.

Diese Aufgabe wird mit einer Kunststoffolie gelöst, welche die Merkmale des Patentanspruchs 1 aufweist.

Erfindungsgemäß besteht die wasserdichte und wasserdampfdurchlässige Kunststoffolie aus mindestens drei unlösbar miteinander verbundenen Folienschichten, wobei eine erste Folienschicht aus einem Kunststoff besteht, welcher den Transport von Wasserdampf auf chemischem Wege durch Absorption/Desorption ermöglicht, und wobei die zweite und dritte Folienschicht mit mineralischen Zusatzstoffen versehen sind, durch welche bei der Dehnung an der Phasenübergangsgrenze zwischen Kunststoff und mineralischen Zusatzstoffen, beziehungsweise über den gesamten Querschnitt der Kunststoffolie Kapillaren ausgebildet sind, welche sich durch die zweite Folienschicht hindurch erstrecken und den Transport von Wasserdampf auf physikalischem Wege ermöglichen.

Hierdurch wird auf überraschend einfache Weise eine Kunststoffolie geschaffen, welche den Transport von Wasserdampf sowohl auf chemischem wie auf physikalischem Wege ermöglicht.

Die Kombination von chemischem und physikalischem Transport von Wasserdampf hat einen entscheidenden Vorteil. Denn die eine Schicht, welche den Wasserdampf auf chemischem Wege transportiert, kann gemäß einer vorteilhaften Ausgestaltung der Erfindung aus Polyurethan, aus Poyetherblockamid, aus einem Copolyamid, aus einem Polyesterderivat, aus Polyester, aus einem Copolyester oder aus Mischungen dieser Stoffe bestehen, wodurch diese Folienschicht absolut wasserdicht ist.

Die zweite Schicht aus einem Kunststoff, welcher den Transport von Wasserdampf auf physikalischem Wege ermöglicht, ist demgegenüber nicht unbedingt absolut wasserdicht, quillt aber nicht auf, wobei sich diese Schicht besonders gut dazu eignet, mit einem Vlies verbunden zu werden.

Durch die Kombination der beiden unterschiedlichen Kunststoffe können beide Schichten jeweils dünn ausgelegt werden, insbesondere die Schicht, welche durch Einschlüsse von mineralischen Bestandteilen Poren aufweist. Da diese Schicht vorteilhafter Weise aus einem Kunststoff besteht, beispielsweise Polyethylen oder Polypropylen, welcher nicht aufquillt, kann diese Schicht dauerhaft mit einem Vlies oder mit anderen Trägermaterialien verbunden werden.

Insgesamt können beiden Folienschichten so dünn ausgelegt werden, wie sie allein nicht handhabbar wären bzw. keine ausreichende mechanische Festigkeit besitzen würden, im Verbund jedoch diese Eigenschaften besitzen.

Gemäß der Erfindung ist die Kunststoffolie dreischichtig, derart, daß die Oberseite und die Unterseite der ersten Folienschicht jeweils mit einer zweiten Folienschicht verbunden sind. Hierdurch ist es möglich, beide Seiten der derart gewonnenen Kunststoffolie mit einem Trägermaterial wie einem Vlies zu verbinden, was insbesondere der mechanischen Festigkeit des Gesamtverbundes zugute kommt. Soll die erfindungsgemäße Kunststoffolie im Baubereich beispielsweise als Unterspannbahn Verwendung finden, kann die Kunststoffolie und/oder das mit ihr verbundene Trägermaterial so ausgerüstet werden, daß die Anforderung der Schwerentflammbarkeit gemäß DIN-Norm 4102 B2 erfüllt wird.

In einer praktischen Ausgestaltung der Erfindung ist vorgesehen, daß die Oberseite der zweiten Folienschicht mit einem Trägermaterial, bevorzugterweise mit einem Vlies, verbunden ist, und zwar gemäß weiteren Ausgestaltungen der Erfindung, daß das Vlies mit der zweiten Folienschicht verklebt ist, insbesondere durch einen Hotmelt-Klebstoff. Als Trägermaterialien kommen aber auch weitere, geeignte Materialien in Betracht, beispielsweise textile Gewirke und Gelege, Geotextilien, zellstoffhaltige Materialien und dergleichen.

In weiteren praktischen Ausgestaltungen der Erfindung ist vorgesehen, daß die erste Folienschicht eine Dicke von 2 bis 20 µm und daß die zweite Folienschicht eine Dicke von 1 bis 10 µm aufweist. Es hat sich nämlich gezeigt, daß eine derartige Dicke der Schichten, die für sich allein nicht mehr praktisch handhabbar wären bzw. keine ausreichende mechanische Festigkeit mehr besitzen würden, bei der erfindungsgemäßen Kunststoffolie ausreichen, um einerseits eine ausreichende mechanische Festigkeit zu gewährleisten und andererseits den Anforderungen an eine vollständige Wasserdichtigkeit einerseits und einen genügenden Wasserdampftransport andererseits genügen.

Die erfindungsgemäße Kunststoffolie wird gemäß Patentanspruch-11 durch ein Verfahren hergestellt, bei dem in einem ersten Schritt der Kunststoff der ersten Folienschicht und der mit mineralischen Füllstoffen versehene Kunststoff der zweiten Folienschicht getrennt geschmolzen werden, und daß in einem zweiten Verfahrensschritt über ein gemeinsames Folienherstellverfahren, bevorzugterweise ein gemeinsames Extrusionssystem, die Kunststoffe der ersten Folienschicht und der zweiten Folienschicht in situ miteinander verbunden werden, und bei dem in einem dritten Verfahrensschritt die miteinander verbundenen Folienschichten gemeinsam verstreckt werden, wodurch die Kapillaren der zweiten Folienschicht gebildet werden.

Durch das gemeinsame Extrudieren der Kunststoffe von ersten und zweiter Folienschicht entsteht zunächst eine Folie, deren Schichten während des Entstehungsprozesses ineinander fließen und somit untrennbar miteinander verbunden werden. Beim anschließenden Verstrecken reißen die Kapillaren in der zweiten Folienschicht auf, wodurch die zweite Folienschicht die gewünschte Eigenschaft erhält, daß durch sie Wasserdampf auf physikalischem Wege transportiert werden kann.

Weitere vorteilhafte Ausgestaltungen der Erfindung werden anhand der Beschreibung, der Zeichnung und der Patentansprüche beschrieben. In der Zeichnung zeigt:
- Fig. 1: ein Ausführungsbeispiel einer bekannten Kunststoffolie im Querschnitt,
- Fig. 2: ein Ausführungsbeispiel der erfindungsgemäßen Kunststoffolie im Querschnitt,
- Fig. 3: ein Ausführungsbeispiel der erfindungsgemäßen Kunststoffolie im Querschnitt, und

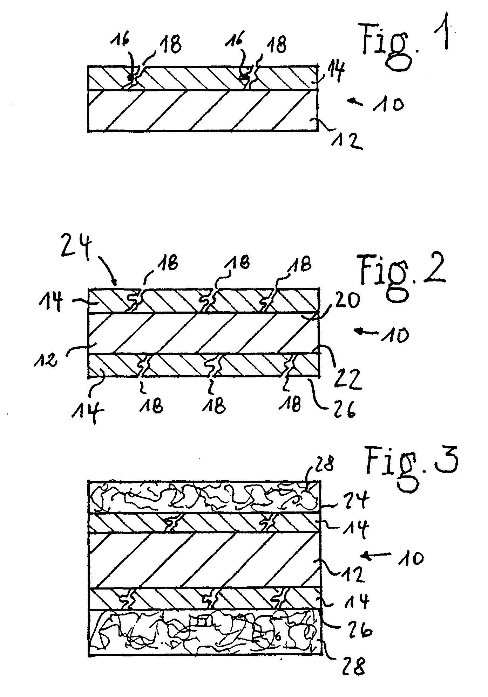

In Fig. 1 ist ein erstes Ausführungsbeispiel der erfindungsgemäßen Kunststoffolie 10 dargestellt. Diese Kunststoffolie 10 besteht aus einer ersten Folienschicht 12 und aus einer zweiten Folienschicht 14. Die erste Folienschicht 12 besteht aus einem Kunststoff, welcher den Transport durch die Kunststoffolie 10 auf chemischem Wege durch Absorption/Desorption ermöglicht, beispielsweise aus Polyurethan oder aus Polyetherblockamid. Die zweite Folienschicht 14 besteht aus einem Kunststoff, beispielsweise aus Polyethylen oder aus Polypropylen, in den mineralische Bestandteile 16, beispielsweise Bariumsulfat oder Kalziumkarbonat, eingelagert sind. Die Kunststoffe der ersten Folienschicht 12 und der zweiten Folienschicht 14 wurden gemeinsam extrudiert und anschließend ebenfalls gemeinsam verstreckt, wodurch Phasenübergangsgrenzen zwischen dem Kunststoffmaterial der zweiten Folienschicht 14 und den mineralischem Zusatzstoffen 16 aufreißen und so Kapillaren 18 bilden, welche sich über den gesamten Querschnitt der zweiten Folienschicht 14 erstrecken. Durch diese Kapillaren 18 kann Wasserdampf auf physikalischem Wege transportiert werden, wohingegen Wasserdampf durch die erste Folienschicht 12 auf chemischem Wege transportiert wird.

In Fig. 2 ist ein zweites Ausführungsbeispiel der erfindungsgemäßen Kunststoffolie 10 dargestellt. Bei dieser zweiten Ausführungsform der erfindungsgemäßen Kunststoffolie 10 ist die erste Folienschicht 12 an ihrer Oberseite 20 mit einer zweiten Folienschicht 14 und an ihrer Unterseite 22 ebenfalls mit einer zweiten Folienschicht 14 versehen, wobei diese der zweiten Folienschicht 14 aus Fig. 1 entspricht, d.h. sie weist ebenso Kapillaren 18 auf, durch welche Wasserdampf auf physikalischem Wege transportiert werden kann. Durch die in Fig. 2 dargestellte Ausführungsform der erfindungsgemäßen Kunststoffolie 10 entsteht eine sandwichartige Kunststoffolie 10, deren Oberseite 24 und Unterseite 26 jeweils durch eine zweite Folienschicht 14 mit Kapillaren 18 gebildet ist.

In Fig. 3 ist eine dritte Ausführungsform der erfindungsgemäßen Kunststoffolie 10 dargestellt. Diese weist mit ihren drei Folienschichten 12 und 14 einen Aufbau gemäß der in Fig. 2 dargestellten Ausführungsform der erfindungsgemäßen Kunststoffolie 10 auf, wobei bei dieser Ausführungsform die Oberseite 24 und die Unterseite 26 der Kunststoffolie 10 jeweils mit einem Vlies 28 verbunden ist. Dieses Vlies 28 kann auf an sich bekannter Weise mit den zweiten Folienschichten 14 verbunden werden, insbesondere durch Thermobondieren, durch Hotmelt-Klebstoffe oder dergleichen.

## Patentansprüche

1. Kunststoffolie (10), welche wasserdicht und wasserdampfdurchlässig ist, bestehend aus mindesten drei unlösbar miteinander verbundenen Folienschichten (12, 14), wobei eine erste Folienschicht (12) aus einem Kunststoff besteht, welcher den Transport von Wasserdampf auf chemischem Wege durch Absorption/Desorption ermöglicht, und wobei eine zweite Folienschicht (14) mit mineralischen Zusatzstoffen (16) versehen ist, durch welche bei der Dehnung an Phasenübergangsgrenzen zwischen Kunststoff und mineralischen Zusatzstoffen (16) Kapillaren (18) ausgebildet sind, welche sich durch die zweite Folienschicht (14) hindurch erstrecken und den Transport von Wasserdampf auf physikalischem Wege ermöglichen, **dadurch gekennzeichnet, daß** die Kunststoffolie (10) dreischichtig ist, derart, daß die Oberseite (20) und die Unterseite (22) der ersten Folienschicht (12) jeweils mit einer zweiten Folienschicht (14) verbunden sind.

2. Kunststoffolie nach Anspruch 1, **dadurch gekennzeichnet, daß** die erste Folienschicht (12) aus Polyurethan, aus Polyetherblockamid, aus einem Copolyamid, aus einem Poyesterderivat, aus Polyester, aus einem Copolyester oder aus einer Mischung dieser Stoffe besteht.

3. Kunststoffolie nach Anspruch 1 oder 2, **dadurch gekennzeichnet, daß** die zweite Folienschicht (14) aus Polypropylen oder aus Polyethylen besteht.

4. Kunststoffolie nach Anspruch 1 - 3, **dadurch gekennzeichnet, daß** die Oberseite (24; 26) der zweiten Folienschicht (14) mit einem Trägermaterial (28) verbunden ist.

5. Kunststoffolie nach Anspruch 4, **dadurch gekennzeichnet, daß** das Trägermaterial (28) ein Vlies (28) ist.

6. Kunststoffolie nach Anspruch 4 oder 5, **dadurch gekennzeichnet, daß** das Trägermaterial (28) mit der zweiten Folienschicht (14) verklebt ist.

7. Kunststoffolie nach Anspruch 6, **dadurch gekennzeichnet, daß** das Trägermaterial (28) durch einen auf die zweite Folienschicht (14) vollflächig aufgetragenen Hotmelt-Klebstoff (30) aufgeklebt ist.

8. Kunststoffolie nach Anspruch 1, **dadurch gekennzeichnet, daß** die erste Folienschicht (12) eine Dicke von 2 bis 20 µm aufweist.

9. Kunststoffolie nach Anspruch 1, **dadurch gekennzeichnet, daß** die zweite Folienschicht (14) eine Dicke von 1 bis 10 µm aufweist.

10. Verfahren zur Herstellung einer Kunststoffolie nach Anspruch 1, umfassend folgende Schritte:
1. Der Kunststoff der ersten Folienschicht (12) und der mit mineralischen Füllstoffen (16) versehene Kunststoff der zweiten Folienschicht (14) werden getrennt geschmolzen,
2. über eine gemeinsames Folienherstellverfahren werden die Kunststoffe der ersten Folienschicht (12) und der zweiten Folienschicht (14) in situ miteinander verbunden,
3. die miteinander verbundenen Folienschichten (12, 14) werden gemeinsam verstreckt, wodurch die Kapillaren (18) der zweiten Folienschicht (14) gebildet werden.

11. Verfahren nach Anspruch 10, **dadurch gekennzeichnet, daß** das gemeinsame Folienherstellverfahren ein gemeinsames Extrusionssystem umfaßt.

## Claims

1. Plastic sheet (10), which is watertight and steam-permeable, comprising at least three non-detachably interconnected sheet layers (12, 14), a first sheet layer (12) being made from a plastic, which permits the chemical transport of steam by absorption/desorption, and in which a second sheet layer (14) is provided with mineral additives (16), through which capillaries (18) are formed through expansion at the phase transition boundaries between the plastic and mineral additive (16) and said capillaries extend through the second sheet layer (14) and permit the physical transport of steam, **characterized in that** the plastic sheet (10) is in three layer form in such a way that the top (20) and bottom (22) of the first sheet layer (12) are in each case connected to a second sheet layer (14).

2. Plastic sheet according to claim 1, **characterized in that** the first sheet layer (12) is of polyurethane, polyether block amide, a copolyamide, a polyester derivative of polyester, a copolyester or a mixture of these materials.

3. Plastic sheet according to claim 1 or 2, **characterized in that** the second sheet layer (14) is of polypropylene or polyethylene.

4. Plastic sheet according to claims 1 to 3, **characterized in that** the top (24, 26) of the second sheet layer (14) is joined to a support material (28).

5. Plastic sheet according to claim 4, **characterized in that** the support material (28) is a non-woven.

6. Plastic sheet according to claim 4 or 5, **characterized in that** the support material (28) is bonded to the second sheet layer (14).

7. Plastic sheet according to claim 6, **characterized in that** the support material (28) is bonded by a hot melt adhesive (30) applied in full-area manner to the second sheet layer (14).

8. Plastic sheet according to claim 1, **characterized in that** the first sheet layer (12) has a thickness of 2 to 20 µm.

9. Plastic sheet according to claim 1, **characterized in that** the second sheet layer (14) has a thickness of 1 to 10 µm.

10. Process for producing a plastic sheet according to claim 1, comprising the following steps:
1) the plastic of the first sheet layer (12) and the plastic of the second sheet layer (14) provided with the mineral fillers (16) are separately melted;
2) by means of a joint sheet production process, the plastics of the first sheet layer (12) and the second sheet layer (14) are interconnected in situ;
3) the interconnected sheet layers (12, 14) are jointly stretched, so that the capillaries (18) of the second sheet layer (14) are formed.

11. Process according to claim 10, **characterized in that** the joint sheet production process incorporates a joint extrusion system.

## Revendications

1. Feuille en matière plastique (10), qui est imperméable à l'eau et perméable à la vapeur d'eau, composée de trois couches (12, 14) au moins, qui sont reliées entre elles de manière inamovible, la première couche (12) étant en une matière artificielle permettant le transport de vapeur d'eau par voie chimique, à savoir par absorption/désorption, la seconde couche (14) étant pourvue d'additifs minéraux (16), grâce auxquels des capillaires (18) sont formés en cas d'allongement aux limites de transition de phase entre la matière artificielle et les additifs minéraux (16), capillaires qui s'étendent à travers la seconde couche (14) et qui permettent le transport de vapeur d'eau par voie physique, **caractérisée en ce que** la feuille en matière artificielle (10) présente trois couches, de sorte que la face supérieure (20) et la face inférieure (22) de la première couche (12) sont respectivement reliées à une seconde couche (14).

2. Feuille en matière artificielle suivant la revendication 1, **caractérisée en ce que** la première couche (12) est en polyuréthanne, en polyéther bloc amide, en copolyamide, en un dérivé du polyester, en copolyester ou en un mélange de ces matières.

3. Feuille en matière artificielle suivant les revendications 1 ou 2, **caractérisée en ce que** la seconde couche (14) est en polypropylène ou en polyéthylène.

4. Feuille en matière artificielle suivant les revendications 1 à 3, **caractérisée en ce que** la face supérieure (24, 26) de la seconde couche (14) est reliée à un matériau porteur (28).

5. Feuille en matière artificielle suivant la revendication 4, **caractérisée en ce que** le matériau porteur (28) est un non-tissé (28).

6. Feuille en matière artificielle suivant les revendications 4 ou 5, **caractérisée en ce que** le matériau porteur (28) est collé à la seconde couche (14).

7. Feuille en matière artificielle suivant la revendication 6, **caractérisée en ce que** le matériau porteur (28) est collé au moyen d'une colle hotmelt (30) appliquée sur l'ensemble de la surface de la seconde couche (14).

8. Feuille en matière artificielle suivant la revendication 1, **caractérisée en ce que** la première couche (12) présente une épaisseur comprise entre 2 et 20 µm.

9. Feuille en matière artificielle suivant la revendication 1, **caractérisée en ce que** la seconde couche (14) présente une épaisseur comprise entre 1 et 10 µm.

10. Procédé de fabrication d'une feuille en matière artificielle suivant la revendication 1 comprenant les étapes suivantes :
1. La matière artificielle de la première couche (12) et la matière artificielle pourvue de charges minérales (16) de la seconde couche (14) sont portées à fusion séparément.
2. Par l'intermédiaire d'un procédé de fabrication de feuilles commun, les matières artificielles de la première couche (12) et de la seconde couche (14) sont reliées entre elles in situ,
3. Les couches (12, 14), reliées entre elles, sont étirées ensemble, ce qui entraîne la formation des capillaires (18) de la seconde couche (14).

11. Procédé suivant la revendication 10, **caractérisé en ce que** le procédé de fabrication de feuilles commun comprend un système d'extrusion commun.
